# EUROPÄISCHE PATENTSCHRIFT

(11) **EP 4 486 690 B1**
(45) Veröffentlichungstag und Bekanntmachung des Hinweises auf die Patenterteilung: **01.04.2026**
(21) Anmeldenummer: 23706761.6
(22) Anmeldetag: 22.02.2023
(51) Int. Cl.: C01B 6/06, C01G 17/00

(54) **VERFAHREN ZUR HERSTELLUNG VON ISOTOPENANGEREICHERTEN GERMANIUM-WASSERSTOFFVERBINDUNGEN**
METHOD FOR PRODUCING ISOTOPE-ENRICHED GERMANIUM-HYDROGEN COMPOUNDS
PROCÉDÉ DE PRODUCTION DE COMPOSÉS HYDROGÈNE-GERMANIUM ENRICHIS EN ISOTOPES

(30) Priorität: 04.03.2022 DE 102022105177
(43) Veröffentlichungstag der Anmeldung: 08.01.2025
(73) Patentinhaber: Forschungsverbund Berlin E.V., 12489 Berlin (DE)
(72) Erfinder: ERNST, Owen, 12487 Berlin (DE); UEBEL, David, 10245 Berlin (DE); BOECK, Torsten, 15746 Groß Köris (DE)
(74) Vertreter: Gulde & Partner
(86) Internationale Anmeldenummer: PCT/EP2023/054384
(87) Internationale Veröffentlichungsnummer: WO 2023/165862

(56) Entgegenhaltungen:
- WO-A1-2013/066033
- CN-A- 101 723 326
- RU-C1- 2 412 747
- RU-C2- 2 280 616
- US-A1- 2014 246 630

## Beschreibung

Die Erfindung betrifft ein Verfahren, welches die Umwandlung einer isotopenreinen Germanium-Fluoridverbindung in eine Germanium-Wasserstoffverbindung ermöglicht.

### Technologischer Hintergrund

Fluoride spielen eine große Rolle in der technischen Isotopenanreicherung. Fluor besitzt nur ein natürlich vorkommendes Isotop, Fluor-19, wodurch in Zentrifugen die Masseanreicherung von Fluor-Verbindungen nur von der Atommasse anderer Komponenten abhängt. Bei der Anreicherung in Zentrifugen werden unterschiedlich schwere Moleküle voneinander separiert. Da die Masse des Fluors immer gleich ist, können einzelne Isotope der zweiten Molekülkomponente angereichert werden, im Rahmen der vorliegenden Offenbarung von Germanium Bei der Anreicherung aus anderen Gasen, wie Wasserstoffverbindungen, stören die verschiedenen Wasserstoffisotope und limitieren die maximal mögliche Anreicherung.

Isotopenanreicherung ist seit Jahrzehnten etabliert für die die Nutzbarmachung von radioaktivem Material zur Energiegewinnung, Rüstungszwecken oder für spezialisierte Medizinanwendungen. Jünger sind Anwendungen für physikalische Megaexperimente wie das Silizium-28 Urkilogramm im Avogadro-Projekt, Neutrino-Detektoren für das Gerda-Projekt aus Germanium ohne Germanium-73, oder als Hochleistung-Tieftemperatur-Wärmeleiter für das Einstein-Teleskop aus Silizium-28.

Für die neue Anwendung in halbleitenden Quantencomputern könnte höchstreines Germanium-72 relevant werden. Diese Quantencomputer nutzen Energieniveauaufspaltung von Quantenobjekten wie Elektronen und Elektronen-Leerstellen zur Konstruktion von Quanten-Logikschaltungen. Dabei kommt die Spin-Neutralität der geradzahligen Isotope zum Einsatz. Erst wenn Verunreinigungen mit Quellen von ungeraden Spins minimal sind, können die Quantenzustände für 1000 ms aufrechterhalten bleiben, die wahrscheinlich notwendige Zeitspanne für stabile Quantencomputer.

Die Isotopenanreicherung ist sehr aufwendig und kostspielig. Eine atomeffiziente Reduktion von Germaniumtetrafluorid ist daher wünschenswert. Bisher sind für die Prozessierung von Fluoriden zu Hydriden vor allem Methoden in der Anwendung, die aus der Adaption herkömmlicher industrieller Prozesse entstanden sind. Diese Methoden, die für den Umgang mit Siliziumfluorid angepasst wurden oder gerade angepasst werden, haben verschiedene Nachteile. Zum Beispiel bieten sie nur eingeschränkte Skalierbarkeit jenseits des Labormaßstabs und weisen nur eine limitierte Ausbeute auf (Atomeffizienz). Für die Anwendung auf Germaniumtetrafluorid gibt es keine etablierte Technologie.

WO 2013/066033 A1 offenbart ein Verfahren zur Herstellung von Germane (GeH₄). GeF₄ wird in einer wässriger Lösung gelöst und mit einem Reduktionsmittel, wie NaAlH₄, reagiert. Dabei entstehen Germane.

Da keine Methoden für die Prozessierung von Germaniumtetrafluorid in der Anwendung sind, wird Germanium typischerweise direkt im German angereichert. Dabei stören jedoch die natürlich vorkommenden Isotope des Wasserstoffs und die maximale Anreicherungsrate der Germaniumisotope ist physikalisch begrenzt. Germanium besitzt deutlich mehr natürliche Isotope als Silizium, was die Anreicherung weiterhin erschwert. Als Resultat wird in der technischen Umsetzung darauf verzichtet, eine saubere Isotopentrennung vorzunehmen, und es wird lediglich das einzige Isotop mit ungerader Massezahl, Germanium-73, entfernt. So verbleibt beispielweise das radioaktive Isotop Germanium-76 und kann in der Anwendung stören. Es besteht demnach ein anhaltender Bedarf nach einem alternativen Syntheseverfahren, das eine ökonomische Anreicherung von Germaniumisotopen ermöglicht.

### Zusammenfassung der Erfindung

Ein oder mehrere der geschilderten Nachteile des Standes der Technik werden mittels des erfindungsgemäßen Verfahrens zur Herstellung von isotopenangereicherten Germanium-Wasserstoffverbindungen nach Anspruch 1 behoben oder zumindest gemindert. Das Verfahren umfasst dazu die folgenden Verfahrensschritte:
a) Bereitstellen eines Gases aus chemisch hochreinem, isotopenangereichertem Germaniumtetrafluorid; und
Bereitstellen einer Reduktionslösung in einem inerten Reaktionsbehälter, wobei die Reduktionslösung ein organisches Lösungsmittel und ein Alkali-Aluminiumhydrid als Reduktionsmittel enthält;
c) Einbringen des Gases in die Reduktionslösung; und
d) Kondensation der durch Reduktion entstehenden gasförmigen Germanium-Wasserstoffverbindungen.

Weitere bevorzugte Ausgestaltungen der Erfindung lassen sich den Unteransprüchen sowie der nachfolgenden Beschreibung entnehmen.

### Kurzbeschreibung der Figuren

Die Erfindung wird nachfolgend anhand eines Ausführungsbeispiels und dazugehöriger Zeichnungen näher erläutert. Die Figuren zeigen:
- Fig. 1 bis 3: Schematische Illustrationen unterschiedlicher Maßnahmen, die der Optimierung der Durchmischung von Reduktionslösung und gasförmigen Germaniumtetrafluorid dienen;
- Fig. 4: Eine schematische Darstellung zur Illustration der Steigweges von Blasen aus Germaniumtetrafluorid bei einer einfachen Einspeisung in den Reaktionsbehälter; und
- Fig. 5 bis 7: Schematische Illustrationen weiterer Maßnahmen, die zu einer Optimierung der Umsetzung von Reduktionslösung und gasförmigen Germaniumtetrafluorid dienen.

### Detaillierte Beschreibung der Erfindung

Nachfolgend wird die Erfindung im Allgemeinen und anhand von beispielhaften Ausführungsvarianten näher erläutert.

Das vorliegende Verfahren zur Herstellung von isotopenangereicherten Germanium-Wasserstoffverbindungen umfasst die folgenden Verfahrensschritte:
a) Bereitstellen eines Gases aus chemisch hochreinem, isotopenangereichertem Germaniumtetrafluorid; und
Bereitstellen einer Reduktionslösung in einem inerten Reaktionsbehälter, wobei die Reduktionslösung ein organisches Lösungsmittel und ein Alkali-Aluminiumhydrid als Reduktionsmittel enthält;
c) Einbringen des Gases in die Reduktionslösung; und
d) Kondensation der durch Reduktion entstehenden gasförmigen Germanium-Wasserstoffverbindungen.

Die Erfindung betrifft demnach einen größenskalierbaren Prozess, der die Umsetzung von isotopenangereicherten Germaniumtetrafluorid (bspw. Germanium-72) zeiteffektiv und mit hoher Atomeffizienz zum entsprechenden German möglich macht. Die Darstellung von German aus Germaniumtetrafluorid stellt eine besondere Herausforderung dar. Zwar existieren etablierte Methoden, um beispielsweise Silan aus Siliziumfluorid zu gewinnen, jedoch sind diese nicht ohne weiteres auf die Germaniumverbindungen übertragbar. Der Grund hierfür liegt in der Chemie der 4. Hauptgruppe, bei der mit steigender Ordnungszahl der Metallcharakter zunimmt. Während Silizium eher zu einer Chemie neigt, bei welcher Elektronen aufgenommen werden, gibt Germanium seine Elektronen vorzugsweise ab. Aus diesem Grund ist eine nucleophile Substitution von Siliziumhalogeniden generell leichter als bei Germaniumhalogeniden.

Für den Prozess wird isotopenangereichertes Germaniumtetrafluorid bereitgestellt. Dieses muss die gewünschte Isotopenanreicherung bereits erfüllen, da diese vom Prozess nicht weiter verbessert wird. Des Weiteren muss das Germaniumtetrafluorid chemisch hochrein sein. Isotopenangereichertes Germaniumtetrafluorid (bspw. Germanium-72-tetrafluorid) wird vorzugsweise in einem möglichst dichten Gasbehälter nach Industrienorm gelagert. Dabei sollten Temperaturschwankungen mit einem Raumklimasystem oder einem Lagerschrank stark begrenzt werden (bspw. auf +/- 1 K). Durch diese Maßnahmen wird der Behälterdruck konstant gehalten und zum Beispiel eine Kondensation im oder am Behälter vermieden, was beides zum Verlust oder zur Verunreinigung des Ausgangsmaterials führen kann. Qualitätskontrolle kann an einer Gasprobe exemplarisch für das gesamte Volumen vorgenommen werden.

Die Reduktionslösung enthält ein organisches Lösungsmittel und als Reduktionsmittel ein Alkali-Aluminiumhydrid und wird im Reaktionsbehälter vorgelegt. Die Reduktionslösung kann aus dem organischen Reduktionsmittel, vorzugsweise Tetrahydrofuran oder Diglycoldimethylether, und einem Alkali-Aluminiumhydrid als Reduktionsmittel bestehen. Die Reduktionslösung kann direkt vor Ort dargestellt werden. Vorzugsweise wird als Reduktionsmittel Natriumaluminiumhydrid eingesetzt, da sich insbesondere stabile Reduktionslösungen mit Tetrahydrofuran oder Diglycoldimethylether herstellen beziehungsweise kommerziell erwerben lassen.

Die Reduktionslösung weist in Schritt c) vorzugsweise eine Temperatur im Bereich von -40°C bis 40°C, insbesondere von -10°C bis 10°C auf, um die Geschwindigkeit der exothermen Reaktion zu kontrollieren und die Bildung von Nebenprodukten zu vermeiden. Während der exothermen Reaktion sollten demnach Reaktionsbehälter und Reaktionsgemenge vorzugsweise gekühlt werden. Dies kontrolliert die Syntheserate und sorgt für eine gesteigerte Atomeffizienz. Des Weiteren verhindert die Kühlung eine Beeinträchtigung des Reaktorgefäßes. Die Zieltemperatur wird dabei beispielsweise über eine am Reaktionsbehälter anliegende Flüssigkeitskühlung geregelt, bei der mit einer Kühlflüssigkeit die gewünschte Zieltemperatur eingestellt wird. Die jeweils notwendige Wärmeabfuhrleistung kann in üblicher Weise bestimmt werden. Die Zieltemperatur kann auch über Druckwechsel im Reaktor erfolgen. Zum Beispiel wird das Gas zuerst komprimiert und kühlt sich bei der anschließenden Expansion in die Anlage auf Zieltemperatur ab (Joule-Thompson-Effekt).

Der bereitgestellte Reaktionsbehälter sollte ein ausreichendes Volumen sowohl für die Reduktionslösung als auch für das Reaktionsgas beinhalten. Der Reaktionsbehälter sollte materialseitig insbesondere so ausgelegt werden, dass einem moderaten Überdruck von 1000 bis 2500 mbar widerstanden wird, denn der Prozess findet in der Regel bei Normaldruck bis leichten Überdruck statt.

Der Reaktionsbehälter ist zumindest in den Bereichen, die mit der Reduktionslösung, Germaniumtetrafluorid und den entstehenden Produkten in Kontakt stehen, aus einem inerten Werkstoff geformt. Weder die Ausgangsprodukte, noch die im Prozess anfallenden Produkte sollen demnach mit dem Werkstoff, aus dem der Reaktionsbehälter geformt ist, reagieren können. Außerdem sollten auch keine Spuren von Elementen vorhanden sein, die eine hohe Reaktionsneigung mit dem Ausgangsmaterial oder der Zielverbindung haben. Auf diese Weise lassen sich Verunreinigungen des Produkts vermeiden, deren Entfernung in der Regel mit einer Verminderung der Ausbeute einhergeht.

Bei dem Prozess wird gasförmiges Germaniumtetrafluorid im Reaktionsbehälter mit beispielweise einer Natriumaluminiumhydrid-Lösung in THF oder Diglycoldimethylether zu German reduziert. Prozesstechnisch ist relevant, Germaniumfluorid mit hoher Isotopenreinheit zu verwenden, um das anschließend aus German erhältliche Endprodukt (isotopenreines Germanium) für Anwendungen, z.B. in der Quantentechnologie, verwenden zu können. Um die Isotopenreinheit während des Prozesses aufrecht zu erhalten, sollte für den Reaktionsbehälter kein Germaniumhaltiges Material, bspw. germaniumfreier Stahl, verwendet werden. Es ist also bevorzugt, wenn der Reaktionsbehälter frei von Germanium ist. Auch alle weiteren Anlagenkomponenten, die mit den im Prozess verwendeten Ausgangsmaterialien und anfallenden Prozessprodukten in Kontakt stehen, sollten zumindest an der Kontaktfläche aus einem inerten und von Germanium freien Material bestehen.

So sollte beispielsweise der Gehalt von Kohlenstoff in Legierungen möglichst gering sein, da ansonsten Kohlenwasserstoff-Verbindungen entstehen könnten, die dann in nachfolgenden Prozess- und Reinigungsschritten entfernt werden müssten. Als Material für den Reaktionsbehälter eignen sich insbesondere metallische Werkstoffe und Kunststoffe. Besonders geeignete Materialien sind:
- chemikalienresistente und rostfreie Stähle, die einen niedrigen Kohlenstoffgehalt aufweisen. Beispiele hierfür sind titanstabilisierte austenitische Stähle, wie X6CrNiMoTi17-12-2.
- Nickelbasislegierungen mit niedrigem Kohlenstoffanteil, insbesondere Nickel-Kupfer-, Nickel-Eisen-, Nickel-Eisen-Chrom-, Nickel-Chrom-, Nickel-Molybdän-Chrom-, Nickel-Chrom-Kobalt-Legierungen und andere Mehrstofflegierungen. Beispiele umfassen NiCr19NbMo, NiCr15Fe und NiCr21Mo14W (Hastelloy C-22).
- unlegiertes Tantal
- Fluorpolymere, wie FEP oder PTFE

Der Reaktionsbehälter wird in der Regel vor Inbetriebnahme durch Anlegen eines Vakuums evakuiert. Die Qualität dieser Reinigung kann dabei durch Anlegen von Heizelementen an das Reaktor- bzw. Anlagengehäuse gesteigert werden, da Verunreinigungen an der Reaktorinnenwand in Zusammenspiel mit dem Vakuum schnell verdampfen und somit aus dem Behälter entfernt werden. Bei diesem Ausheizprozess könnte der Druck durch die evaporierenden Moleküle schnell und stark ansteigen, und damit die Lastgrenze der verwendeten Pumpen überschreiten. Durch nur schrittweises manuelles Erhöhen der Temperatur oder durch Verwenden einer digitalen Temperatursteuerung kann dies vermieden werden.

Der Prozess soll möglichst zeit- und atomeffizient (also mit möglichst vollständiger Umsetzung und Ausbeute) ablaufen. Um dies zu gewährleisten, kann die Durchmischung der beiden Fluide (Gas + Reduktionslösung) durch eine oder mehrere der folgenden Maßnahmen optimiert werden.

Nach einer bevorzugten Variante des Verfahrens erfolgt das Einbringen des Gases in Schritt c) unter konstantem Rühren mit Hilfe eines Rührkörpers und/oder unter konstantem Rühren in einem rotierenden Reaktionsbehälter. Auf diese Weise kann insbesondere vermieden werden, dass lokale Konzentrationsunterschiede des Reduktionsmittels zu einer unvollständigen Umsetzung von Germaniumtetrafluorid führen. Das Rühren, zum Beispiel mit einem Magnetrührer, kann auch zu einer Verlängerung der Verweilzeit des in die Reduktionslösung eingetragenen Gases führen, so dass das für die Reduktion zur Verfügung stehende Zeitfenster vergrößert wird.

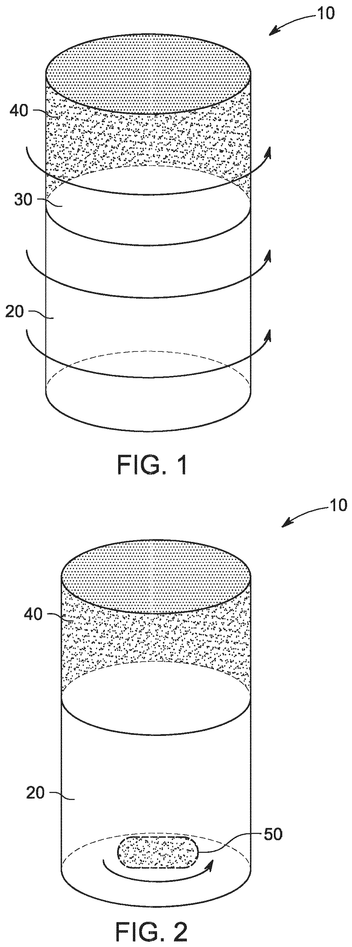

Den Figuren 1 und 2 sind schematische Darstellungen zur Illustration der zuvor genannten Maßnahmen zu entnehmen, die der Optimierung der Durchmischung von Reduktionslösung und gasförmigen Germaniumtetrafluorid dienen. Figur 1 zeigt einen rotierenden, zylindrischen Reaktionsbehälter 10, der etwa hälftig mit einer Reduktionslösung 20 befüllt ist. Oberhalb einer Flüssigkeitsgrenze 30 erstreckt sich ein Gasraum 40, in dem sich das Reaktionsgas nach Durchtritt durch die Reduktionslösung 20 sammelt. Eine Einspeisung von gasförmigen Germaniumtetrafluorid erfolgt im Bodenbereich des Reaktionsbehälters 10. Durch die Rotation wird die Durchmischung von Reduktionslösung 20 und eingespeistem Gas verbessert. In der Ausführungsform nach Figur 2 erfolgt das Rühren mit Hilfe eines Magnetrührers, der einen Magnetfisch 50 in Bewegung setzt.

Weitere bevorzugte Varianten des Verfahrens zur Sicherstellung einer vollständigen Umsetzung der eingesetzten Germanium-Fluorverbindung sehen vor, dass
i) ein Steigweg des Gases in der Reduktionslösung durch Anordnung von Gasleitstrukturen im Reaktionsbehälter verlängert wird; und/oder
ii) eine Phasengrenzfläche zwischen dem Gas und der Reduktionslösung durch die Erzeugung von Blasen vergrößert wird; und/oder
iii) das Gas vor der Kondensation im Schritt d) mehrfach durch die Reduktionslösung geleitet wird.

Gemäß Variante i) sind im Reaktionsbehälter also Strukturen vorhanden, die aufsteigende Gasblasen auf ihrem Weg nach oben umlenken, sodass der in der Reduktionslösung zurückgelegte Weg vergrößert ist. Beispielweise werden dazu Platten mit einem vorgegebenen Winkel im Innern des Reaktionsbehälters installiert, an deren Unterseite die aufsteigenden Blasen schräg zur Flüssigkeitsoberfläche der Reduktionslösung entlanglaufen müssen. Durch die Verlängerung des Steigwegs kann die Ausbeute des Prozesses verbessert werden.

Eine weitere Möglichkeit der Prozessoptimierung sieht nach Variante ii) vor, die Phasengrenzfläche zwischen dem eintretenden gasförmigen Germaniumtetrafluorid und der als Flüssigkeit vorliegenden Reduktionslösung zu vergrößern. Dies wird durch eine aktive Blasenbildung beim Eintrag des Gases ohne Schaumbildung erreicht. Entsprechend umfasst eine solche zur Durchführung des Verfahrens angepasste Anlage Mittel, die der Blasenerzeugung dienen. Ein Beispiel für ein prozesstechnisch besonders robust und kostengünstig realisierbares Mittel ist eine Venturi-Düse, die in Ausgestaltung eines sogenannten Venturi-Injektors dazu geeignet ist Gase in Flüssigkeiten einzutragen. Mit anderen Worten, die Elemente zur Erzeugung von Blasen umfassen insbesondere eine Venturi-Düse, sind aber nicht hierauf beschränkt. So können auch andere Techniken zur Erzeugung von Blasen, insbesondere Mikroblasen (Blasen mit einem mittleren Durchmesser im Bereich von 1µm bis 100µm), Anwendung finden.

Nach Variante iii) wird das Gas vor der Kondensation im Schritt d) mehrfach durch die Reduktionslösung geleitet. Auch diese Maßnahme soll eine möglichst vollständige Umsetzung von Germaniumtetrafluorid in der Reduktionslösung sicherstellen. Eine zur Durchführung dieser Verfahrensvariante angepasste Anlage umfasst demnach Mittel, die das oberhalb der Reduktionslösung austretende Gas auffangen und an gleicher oder anderer Stelle wieder in die Reduktionslösung einleiten.

Alle zuvor genannten Varianten i) bis iii) lassen sich (beliebig) miteinander kombinieren. Ebenso kann die Reduktionslösung gleichzeitig - wie oben ausgeführt - gerührt werden.

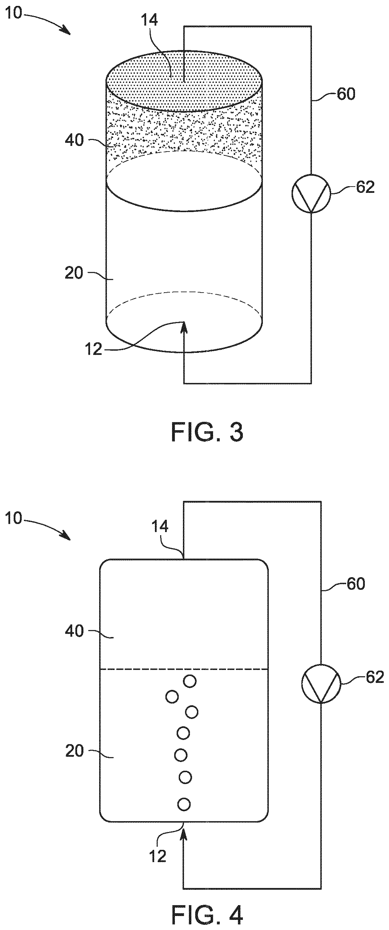

In Figur 3 ist - stark schematisiert - das Prinzip der Variante iii) dargestellt. Der Reaktionsbehälter 10 ist etwa zur Hälfte mit der Reduktionslösung 20 befüllt und eine Gaseinspeisung erfolgt im Bodenbereich des Reaktionsbehälters 10 über eine Eintrittsöffnung 12. Das aus der Reduktionslösung austretende Reaktionsgas - das aus German, eventuell noch nicht umgesetzten Germaniumtetrafluorid und gasförmigen Nebenprodukten besteht - wird im Gasraum 40 gesammelt. Im Deckenbereich des Reaktionsbehälters 10 setzt ein Rohrsystem 60 mit einer Pumpe 62 an einer Austrittsöffnung 14 an. Über das Rohrsystem 60 ist eine stete Rückführung des Reaktionsgases zur Vervollständigung des Umsatzes von eventuell noch vorhandenem Germaniumtetrafluorid möglich. Mit anderen Worten, die Ausführungsform weist einen Gaskreislauf auf, mit dem eine stete Neueinspeisung des Reaktionsgases erfolgen kann. Aus Gründen der Übersichtlichkeit wurde auf die Darstellung eines Ventilsystems verzichtet, das die Einspeisung von Germaniumtetrafluorid aus dem Vorratstank und die Entnahme des vollständig umgesetzten Reaktionsgases steuert.

Figur 4 gleicht im Aufbau der in Figur 3 dargestellten Ausführungsform. Zusätzlich dargestellt sind Blasen 42 des in der Reduktionlösung 20 aufsteigenden Reaktionsgases. Wie ersichtlich, weisen die aufsteigenden Blasen 42 einen ausgehend von der Eintrittsöffnung 12 nahezu senkrechten Steigweg auf. Die Ausführungsform der Figur 4 vereinigt die oben genannten Varianten ii) und iii), weist also auch einen Gaskreislauf auf.

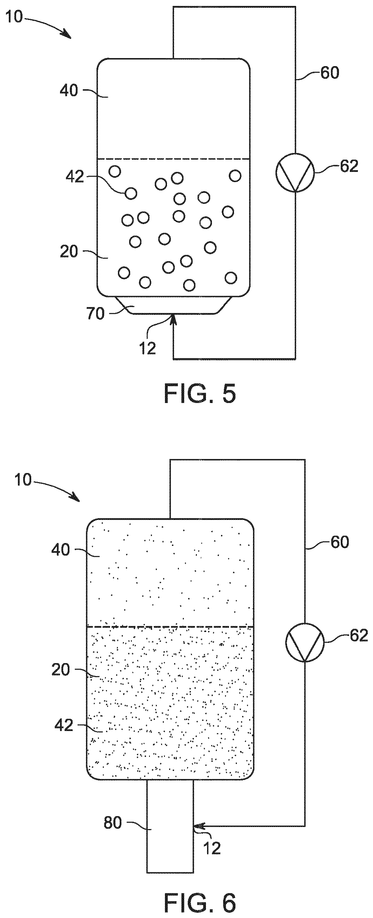

Um die Durchmischung weiter zu verbessern, kann die Einspeisung des Reaktionsgases auch an mehreren Stellen erfolgen. Im Bodenbereich der in Figur 5 dargestellten Ausführungsform ist dazu ein Bauelement 70 zur Erzeugung von Blasen 42 vorgesehen, über das ein Austritt der Blasen 42 im gesamten Bodenbereich ermöglicht wird. Das Bauelement 70 wird trivial auch als sogenannter Bubbler bezeichnet. Die Maßnahme führt in der Regel auch zu einer Verringerung des mittleren Durchmessers der Blasen 42, sodass insgesamt die Phasengrenzfläche zwischen Flüssigkeit und Gas vergrößert wird.

Eine weitere Vergrößerung der Phasengrenzfläche zwischen Flüssigkeit und Gas ist mit der in Figur 6 dargestellten Ausführungsform möglich. Die Einspeisung des Reaktionsgases im Bodenbereich des Reaktionsbehälters 10 erfolgt hier über eine Venturi-Düse 80. Der mittlere Durchmesser der Blasen 42 lässt sich auf diese Weise stark verringern. Es können beispielsweise Mikroblasen mit einem mittleren Durchmesser von 1µm bis 100µm erzeugt werden.

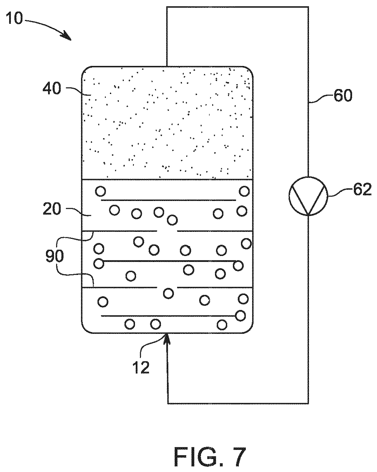

Schließlich zeigt Figur 7 stak schematisiert eine Ausführungsform nach Variante i), bei der ein Steigweg des aufsteigenden Reaktionsgases durch Gasleitstrukturen 90 vergrößert wird. Die Gasleitstrukturen 90 sind hier exemplarisch durch waagrecht in der Reduktionslösung 20 angeordnete Platten verwirklicht.

In Schritt d) wird die durch Reduktion entstehende gasförmige Germanium-Wasserstoffverbindung durch Kondensation aufgefangen und kann dann weiterverarbeitet werden. Zur Kondensation wird in der Regel eine Kühlfalle verwendet, in der sich das verflüssigte German sammelt. In einer bevorzugten Variante des Verfahrens erfolgt dabei die Kondensation in Schritt d) in einem zweistufigen Prozess, wobei das Reaktionsgas zunächst eine erste Kühlfalle bei einer Temperatur im Bereich von -80°C bis -50°C durchläuft und anschließend die isotopenangereicherte Germanium-Wasserstoffverbindung in einer zweiten Kühlfalle bei einer Temperatur im Bereich von -110°C bis -90°C auskondensiert wird. In der ersten Kühlfalle erfolgt eine Aufreinigung des Produkts, bei der nicht umgesetztes Germaniumtetrafluorid und Nebenprodukte entfernt werden. In der zweiten Kühlfalle wird das Produkt (German) kondensiert und in flüssiger Form aufgefangen. Das aufgereinigte German kann in Gastanks gelagert werden.

## Patentansprüche

1. Verfahren zur Herstellung von isotopenangereicherten Germanium-Wasserstoffverbindungen mit den folgenden Verfahrensschritten:
a) Bereitstellen eines Gases aus chemisch hochreinem, isotopenangereichertem Germaniumtetrafluorid; und
Bereitstellen einer Reduktionslösung (20) in einem inerten Reaktionsbehälter (10), wobei die Reduktionslösung (20) ein organisches Lösungsmittel und ein Alkali-Aluminiumhydrid als Reduktionsmittel enthält;
c) Einbringen des Gases in die Reduktionslösung (20); und
d) Kondensation der durch Reduktion entstehenden gasförmigen Germanium-Wasserstoffverbindungen.

2. Verfahren nach Anspruch 1, **dadurch gekennzeichnet, dass** als Reduktionsmittel Natriumaluminiumhydrid eingesetzt wird.

3. Verfahren nach Anspruch 1 oder 2, **dadurch gekennzeichnet, dass** als Lösungsmittel Tetrahydrofuran oder Diglycoldimethylether eingesetzt wird.

4. Verfahren nach einem der vorhergehenden Ansprüche, **dadurch gekennzeichnet, dass** die Reduktionslösung (20) in Schritt c) eine Temperatur im Bereich von -40°C bis 40°C aufweist.

5. Verfahren nach einem der vorhergehenden Ansprüche, **dadurch gekennzeichnet, dass** der Reaktionsbehälter (10) frei von Germanium ist.

6. Verfahren nach einem der vorhergehenden Ansprüche, **dadurch gekennzeichnet, dass** das Einbringen des Gases in Schritt c) unter konstantem Rühren mit Hilfe eines Rührkörpers und/oder unter konstantem Rühren in einem rotierenden Reaktionsbehälter (10) erfolgt.

7. Verfahren nach einem der vorhergehenden Ansprüche, **dadurch gekennzeichnet, dass**
i) ein Steigweg des Gases in der Reduktionslösung (20) durch Anordnung von Gasleitstrukturen (90) im Reaktionsbehälter (10) verlängert wird; und/oder
ii) eine Phasengrenzfläche zwischen dem Gas und der Reduktionslösung (20) durch die Erzeugung von Blasen (42) vergrößert wird; und/oder
iii) das Gas vor der Kondensation im Schritt d) mehrfach durch die Reduktionslösung (20) geleitet wird.

8. Verfahren nach Anspruch 7, **dadurch gekennzeichnet, dass** die Mittel zur Vergrößerung der Phasengrenzfläche Elemente zur Erzeugung von Blasen (42) oder eine Venturi-Düse (80) umfassen.

9. Verfahren nach einem der vorhergehenden Ansprüche, **dadurch gekennzeichnet, dass** die Kondensation in Schritt d) in einem zweistufigen Prozess erfolgt, wobei das Reaktionsgas zunächst eine erste Kühlfalle bei einer Temperatur im Bereich von -80°C bis -50°C durchläuft und anschließend die isotopenangereicherte Germanium-Wasserstoffverbindung in einer zweiten Kühlfalle bei einer Temperatur im Bereich von -110°C bis -90°C auskondensiert wird.

## Claims

1. A method for the producing of isotope-enriched germanium-hydrogen compounds, comprising the following method steps:
a) providing a gas of chemically ultra-pure, isotope-enriched germanium tetrafluoride; and
b) providing a reducing solution (20) in an inert reaction vessel (10), wherein the reducing solution (20) contains an organic solvent and an alkali-aluminium hydride as reducing agent;
c) introducing the gas into the reducing solution (20); and
d) condensing the gaseous germanium-hydrogen compounds produced by reduction.

2. The method of claim 1, **characterised in that** sodium aluminium hydride is used as the reducing agent.

3. The method of claim 1 or 2, **characterised in that** tetrahydrofuran or diglycol dimethyl ether is used as the solvent.

4. The method of any one of the preceding claims, **characterised in that** the reducing solution (20) in step c) has a temperature in the range from -40°C to 40°C.

5. The method of any one of the preceding claims, **characterised in that** the reaction vessel (10) is free of germanium.

6. The method of any one of the preceding claims, **characterised in that** said introducing the gas in step c) takes place with constant stirring by means of a stirring body and/or with constant stirring in a rotating reaction vessel (10).

7. The method of any one of the preceding claims, **characterised in that**
i) a rising path of the gas in the reducing solution (20) is extended by arranging gas guiding structures (90) in the reaction vessel (10); and/or
ii) a phase interface between the gas and the reducing solution (20) is increased by generating bubbles (42); and/or
iii) the gas is passed through the reducing solution (20) several times prior to said condensing in step d).

8. The method of claim 7, **characterised in that** the means for increasing the phase interface comprise elements for generating bubbles (42) or a Venturi nozzle (80).

9. The method of any one of the preceding claims, **characterised in that** said condensing in step d) takes place in a two-stage process, wherein the reaction gas first passes through a first cold trap at a temperature in the range from -80°C to -50°C and then the isotope-enriched germanium-hydrogen compound is condensed out in a second cold trap at a temperature in the range from -110°C to -90°C.

## Revendications

1. Procédé de fabrication de composés de germanium et d'hydrogène enrichis en isotopes, comprenant les étapes suivantes :
a) fourniture d'un gaz composé de tétrafluorure de germanium enrichi en isotopes et de haute pureté chimique ; et
b) mise à disposition d'une solution réductrice (20) dans un récipient de réaction inerte (10), la solution réductrice (20) contenant un solvant organique et un hydrure d'aluminium alcalin comme agent réducteur ;
c) introduction du gaz dans la solution réductrice (20) ; et
d) condensation des composés de germanium et d'hydrogène gazeux résultant de la réduction.

2. Procédé selon la revendication 1, **caractérisé en ce que** l'on utilise de l'hydrure de sodium et d'aluminium comme agent réducteur.

3. Procédé selon la revendication 1 ou 2, **caractérisé en ce qu'**on utilise comme solvant du tétrahydrofurane ou de l'éther diglycoldiméthylique .

4. Procédé selon l'une des revendications précédentes, **caractérisé en ce que** la solution réductrice (20) dans l'étape c) présente une température comprise entre -40 °C et 40 °C.

5. Procédé selon l'une des revendications précédentes, **caractérisé en ce que** le récipient de réaction (10) est exempt de germanium.

6. Procédé selon l'une des revendications précédentes, **caractérisé en ce que** l'introduction du gaz à l'étape c) s'effectue sous agitation constante à l'aide d'un agitateur et/ou sous agitation constante dans un récipient de réaction rotatif (10).

7. Procédé selon l'une des revendications précédentes, **caractérisé en ce que**
i) un trajet ascendant du gaz dans la solution réductrice (20) est prolongé par la disposition de structures de guidage de gaz (90) dans le récipient de réaction (10) ; et/ou
ii) une interface de phase entre le gaz et la solution réductrice (20) est agrandie par la formation de bulles (42) ; et/ou
iii) le gaz est conduit plusieurs fois à travers la solution réductrice (20) avant la condensation à l'étape d).

8. Procédé selon la revendication 7, **caractérisé en ce que** les moyens pour agrandir l'interface de phase comprennent des éléments pour générer des bulles (42) ou une buse Venturi (80).

9. Procédé selon l'une des revendications précédentes, **caractérisé en ce que** la condensation à l'étape d) s'effectue à l'aide d'un processus en deux étapes, le gaz réactionnel passant d'abord par un premier piège à froid à une température comprise entre -80 °C et -50 °C, puis le composé de germanium et d'hydrogène enrichi en isotopes étant condensé dans un deuxième piège à froid à une température comprise entre -110 °C à -90 °C.
